# EUROPÄISCHE PATENTSCHRIFT

(11) **EP 0 489 953 B1**
(45) Veröffentlichungstag und Bekanntmachung des Hinweises auf die Patenterteilung: **03.08.1994**
(21) Anmeldenummer: 90123888.1
(22) Anmeldetag: 12.12.1990
(51) Int. Cl.: G01D 7/06, B60K 37/02, G02B 27/00

(54) **Anzeigeeinheit**
Display unit
Unité d'affichage

(43) Veröffentlichungstag der Anmeldung: 17.06.1992
(73) Patentinhaber: VDO Adolf Schindling AG, D-60487 Frankfurt (DE)
(72) Erfinder: Navratik, Jaromir, W-6093 Flörsheim-Wicker (DE); Heinrich, Kurt, W-6390 Usingen 5 (DE)
(74) Vertreter: Klein, Thomas, Dipl.-Ing. (FH)

(56) Entgegenhaltungen:
- EP-A- 0 064 865
- EP-A- 0 120 488
- DE-A- 2 519 308
- DE-A- 3 233 300
- DE-B- 2 064 025

## Beschreibung

Die Erfindung bezieht sich auf eine Anzeigeeinheit, insbesondere für Kraftfahrzeuge, mit einer einer bestimmten Beobachterposition zugewandten, ein erstes Anzeigeelement enthaltenen Anzeigeebene, und mit einem zweiten Anzeigeelement, dessen Anzeige über eine zwischen der Beobachterposition und der Anzeigeebene angeordnete, gegenüber einer Verbindungslinie Zwischen der Beobachterposition und dem Anzeigeelement etwa um einen Winkel geneigte, transparente Scheibe zur Beobachterposition hin reflektierbar ist.

Bei derartigen Anzeigeeinheiten (DE-B-20 64 025, EP-A-0 120 488) ist es möglich, bei Bedarf zusätzliche Anzeigen in den Bereich der Anzeigeebene für den Beobachter sichtbar einzuspiegeln. Bauraumprobleme im Bereich hinter der Anzeigeebene zur Unterbringung der Anzeigeelemente können so gut vermieden werden.

Von Nachteil bei diesen bekannten Anzeigeeinheiten ist es aber, daß ein Teil der auf die transparente Scheibe auftreffenden Strahlen der Anzeige des zweiten Anzeigeelementes transmittiv in die Scheibe eindringen bzw. durch die Scheibe hindurchtreten.

Dies führt zum einen neben der primären Spiegelung an der dem Beobachter vorderen Grenzfläche der Scheibe zu einer zweiten Spiegelung an der dem Beobachter entfernteren Grenzfläche der Scheibe und damit zu einem Doppelbild.

Zum anderen bewirken die auf die Anzeigeebene auftreffenden Strahlen eine Störung des Bildes des ersten Anzeigeelements.

Aus der DE-A-32 33 300 ist eine geneigte Scheibe vor mehreren Anzeigeelementen angeordnet. In der Scheibe sind eine Vielzahl zueinander parallele Lamellen vorhanden, deren Längserstreckung sich quer zur Blickrichtung des Beobachters erstreckt. Durch die Lamellen soll ein einheitliches Erscheinungsbild der hinter der Scheibe liegenden Anzeigeeinheiten erzeugt werden. Weiterhin soll durch weitgehende Absorption von Streulicht eine Entspiegelungswirkung erreicht werden.

Aufgabe der Erfindung ist es, eine Anzeige der eingangs genannten Art zu schaffen, die eine störungsfreie Darstellung aller Anzeigeelemente gewährleistet.

Diese Aufgabe wird erfindungsgemäß dadurch gelöst, daß in der transparenten Scheibe eine Vielzahl zueinander paralleler Lamellen geringer, die Sichtbarkeit der Anzeigeebene von der Beobachterposition aus nicht behindernder Dicke angeordnet sind, deren Längserstreckung sich etwa quer zur Verbindungslinie zwischen der Beobachterposition und dem Anzeigeelement erstreckt, wobei die Strahlen der Anzeige des zweiten Anzeigeelements unter einem solchen Winkel auf die transparente Scheibe auftreffen, daß deren transmittiv in die Scheibe eintretenden Lichtanteile auf die lichtabsorbierend ausgebildeten Lamellenflächen auftreffen. Dadurch kann der Beobachter praktisch unbehindert durch die Lamellen die Anzeige des ersten Anzeigeelementes beobachten, während der transmittive Anteil der in die Scheibe eingespiegelten Anzeige zumindest weitgehend von den Lamellen absorbiert wird. Von der auf der Scheibe sichtbaren Anzeige des zweiten Anzeigeelements ist nur die an der vorderen Grenzfläche der Scheibe reflektierte Darstellung für den Beobachter sichtbar.

Um eine Anzeige über eine größere Breitenerstreckung gut erfaßbar zu ermöglichen, ist die Längserstreckung der Lamellen vorzugsweise etwa horizontal gerichtet.

Entspricht die Breite der Lamellen annähernd dem Abstand zwischen den Grenzflächen der Scheibe in Blickrichtung des Beobachters, so kann eine Transmission bis zur Anzeigeebene weitgehend verhindert werden.

Die Scheibe kann sowohl aus einem starren Material aber auch aus einer transparenten Folie bestehen. Letztere ermöglicht eine einfachere Bearbeitung und Montage der Scheibe.

Da in einem Kraftfahrzeug üblicherweise bereits eine Hutze vorhanden ist, kann ohne wesentlichen zusätzlichen Raumbedarf das zweite Anzeigeelement in einer einen Lichteinfall von oben auf die Anzeigeebene abdeckenden Hutze angeordnet sein.

Das zweite Anzeigeelement kann sowohl eine Warnlampe als auch eine veränderbare Zeichen anzeigende Anzeige insbesondere eine transmissive Flüssigkristallanzeige sein.

Vorzugsweise ist das erste Anzeigeelement ein Anzeigeinstrument eines Armaturenbrettes, wobei auch dieses Anzeigeelement eine Flüssigkristallanzeige sein kann.

Ein Ausführungsbeispiel der Erfindung ist in der Zeichnung dargestellt und wird im folgenden näher beschrieben. Es zeigen:
- Fig. 1: einen Querschnitt einer Kraftfahrzeuganzeigeeinheit,
- Fig. 2: einen stilisierten Querschnitt einer Kraftfahrzeuganzeigeeinheit mit Strahlengangdarstellung,
- Fig. 3: eine Querschnittsansicht eines vergrößerten Ausschnitts einer Scheibe.

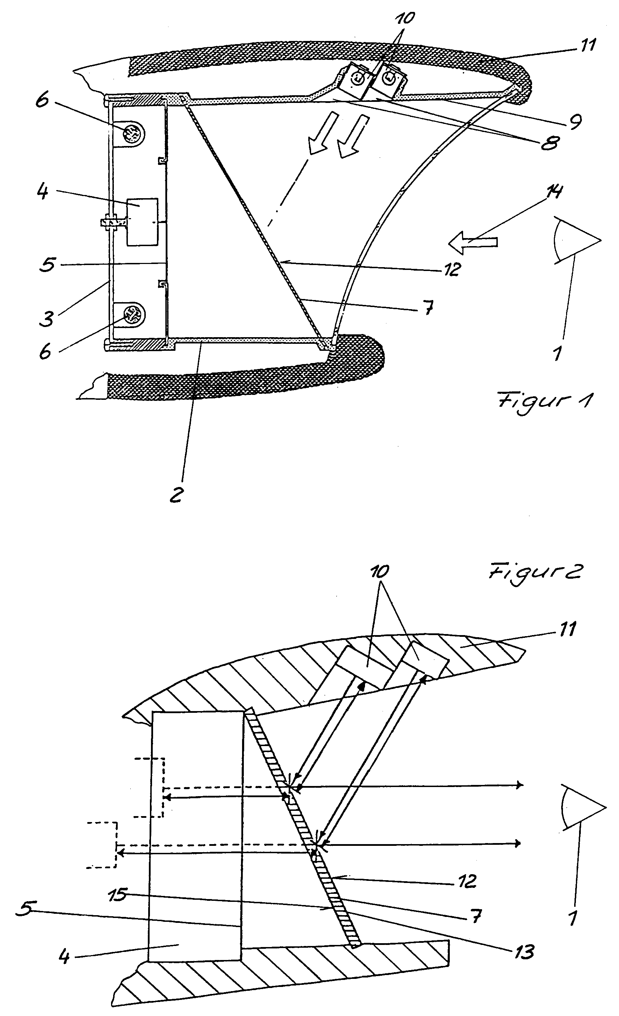

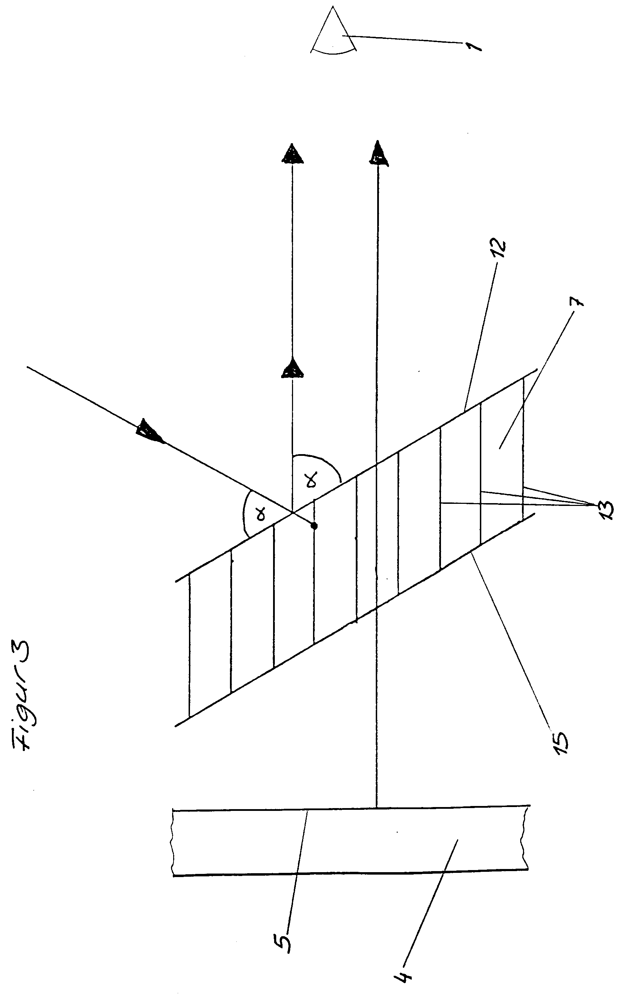

Die in den Fig. 1 und 2 dargestellte Anzeigeeinheit besitzt ein zu der Position eines Beobachters 1 hin offenes Gehäuse 2, das in das Armaturenbrett eines Kraftfahrzeugs eingebaut ist. Im Bereich des Bodens 3 des Gehäuses 2 ist ein ein erstes Anzeigeelement 4 bildendes Instrument derart angeordnet, daß es mit seiner Anzeigeebene 5 zum Beobachter 1 hin zeigt.

Zur Durchleuchtung des ersten Anzeigeelementes 4 sind hinter der Anzeigeebene 5 zwei Lichtquellen 6 angeordnet.

Unter einem Winkel von 30°geneigt ist zwischen der Anzeigebene 5 und dem Beobachter 1 eine ebene Scheibe 7 angeordnet. Dabei erstreckt sich der obere Rand der Scheibe 7 nahe der Anzeigeebene 5 parallel zu dieser, während der untere Rand der Scheibe 7 sich in einem größeren Abstand zur Anzeigeebene 5 befindet.

In Aufnahmeöffnungen 8 der oberen Gehäusewand 9 sind auf der der Anzeigeebene 5 entfernteren Seite der Scheibe 7 zwei beleuchtbare zweite Anzeigeelemente 10 angeordnet, wobei diese obere Gehäusewand 9 von einer Hutze 11 überdeckt ist.

Die Strahlenanzeigen der zweiten Anzeigeelemente 10 treffen unter einem solchen Einfallswinkel α auf die Scheibe 7, daß ihre Reflektion an der vorderen Grenzfläche 12 der Scheibe 7 zum Beobachter 1 hin gerichtet ist. Diese Reflektion wird von dem Beobachter als ein virtuelles Bild in einer Ebene gesehen, deren Abstand auf der dem Beobachter 1 abgewandten Seite der Scheibe 7 dem Abstand des jeweiligen zweiten Anzeigeelementes 10 von der Stelle der Scheibe 7 entspricht, auf die die Strahlen seiner Anzeige auftreffen.

In der transparenten Scheibe 7 sind eine Vielzahl in geringem Abstand zueinander parallele Lamellen 13 geringer Dicke angeordnet. Die Längserstreckung der Lamellen 13 verläuft horizontal quer zur Blickrichtung 14 des Beobachters 1. In der Breite erstrecken sich die Lamellen 13 in Blickrichtung 14 von der vorderen Grenzfläche 12 zur hinteren Grenzfläche 15 der Scheibe 7. Dadurch wird durch die Lamellen 13 die Sichtbarkeit der Anzeigeebene 5 für den Beobachter 1 nicht behindert. Dies ist in Fig. 3 deutlich zu sehen.

Weiterhin ist in Fig. 3 auch deutlich zu sehen, daß der Anteil der auf die Scheibe 7 auftreffenden Strahlen, der nicht an der Grenzfläche 12 zum Beobachter 1 hin reflektiert wird, sondern transmittiv in die Scheibe eindringt, auf die Lamellen 13 auftrifft. Die lichtabsorbierend ausgebildeten Lamellen 13 verhindern, daß diese Strahlenanteile bis zur hinteren Grenzfläche 15 gelangen und dort ein zweites Mal reflektiert werden können.

## Patentansprüche

1. Anzeigeeinheit, mit einer einer bestimmten Beobachterposition zugewandten, ein erstes Anzeigeelement (4) enthaltenden Anzeigeebene (5), und mit einem zweiten Anzeigeelement (10), dessen Anzeige über eine zwischen der Beobachterposition (1) und der Anzeigeebene (5) angeordnete, gegenüber einer Verbindungslinie zwischen der Beobachterposition (1) und dem Anzeigeelement (4) etwa um einen Winkel (α) geneigte, transparente Scheibe (7) zur Beobachterposition (1) hin reflektierbar ist, dadurch gekennzeichnet, daß in der transparenten Scheibe (7) eine Vielzahl zueinander paralleler Lamellen (13) geringer, die Sichtbarkeit der Anzeigeebene von der Beobachterposition aus nicht behindernder Dicke angeordnet sind, deren Längserstreckung sich etwa quer zur Verbindungslinie zwischen der Beobachterposition (1) und dem Anzeigeelement (4) und deren Breitenerstreckung sich etwa in Richtung der Verbindungslinie zwischen der Beobachterposition (1) und dem Anzeigeelement (4) erstreckt, wobei die Strahlen der Anzeige des zweiten Anzeigeelements unter einem solchen Winkel (α) auf die transparente Scheibe (7) auftreffen, daß deren transmittiv in die Scheibe (7) eintretenden Lichtanteile auf die lichtabsorbierend ausgebildeten Lamellenflächen auftreffen.

2. Anzeigeeinheit nach Anspruch 1, dadurch gekennzeichnet, daß die Längserstreckung der Lamellen (13) etwa horizontal gerichtet ist.

3. Anzeigeeinheit nach einem der vorhergehenden Ansprüche, dadurch gekennzeichnet, daß die Breite der Lamellen (13) annähernd dem Abstand zwischen den Grenzflächen (12, 15) der Scheibe (7) in Richtung der Verbindungslinie zwischen der Beobachterposition (1) und dem Anzeigeelement entspricht.

4. Anzeigeeinheit nach einem der vorhergehenden Ansprüche, dadurch gekennzeichnet, daß die Scheibe eine transparente Folie ist.

5. Anzeigeeinheit nach einem der vorhergehenden Ansprüche, dadurch gekennzeichnet, daß das zweite Anzeigeelement (10) in einer einen Lichteinfall von oben auf die Anzeigeebene (5) abdeckende Hutze (11) angeordnet ist.

6. Anzeigeeinheit nach einen der vorhergehenden Ansprüche, dadurch gekennzeichnet, daß das zweite Anzeigeelement (10) eine Warnlampe ist.

7. Anzeigeeinheit nach einem der Ansprüche 1 bis 5, dadurch gekennzeichnet, daß das zweite Anzeigeelement eine veränderbare Zeichenanzeige in der Anzeige ist.

8. Anzeigeeinheit nach einem der vorhergehenden Ansprüche, dadurch gekennzeichnet, daß das zweite Anzeigeelement eine transmissive Flüssigkristallanzeige ist.

9. Anzeigeeinheit nach einem der vorhergehenden Ansprüche, dadurch gekennzeichnet, daß das erste Anzeigeelement (4) ein Anzeigeinstrument eines Armaturenbretts ist.

10. Anzeigeeinheit nach einem der vorhergehenden Ansprüche, dadurch gekennzeichnet, daß das erste Anzeigeelement eine Flüssigkristallanzeige ist.

## Claims

1. A display unit, having a display plane (5) facing a given observer position and containing a first display element (4), and having a second display element (10), the display of which can be reflected towards the observer position (1) via a transparent plate (7) disposed between the observer position (1) and the display plane (5) and inclined approximately at an angle (α) in relation to a connecting line between the observer position (1) and the display element (4), characterised in that a plurality of lamellae (13), which are parallel to each other and are of low thickness which does not impair the visibility of the display plane from the observer position, is disposed in the transparent plate (7), the longitudinal span of which lamellae extends approximately transversely to the connecting line between the observer position (1) and the display element (4) and the span of width of which extends approximately in the direction of the connecting line between the observer position (1) and the display element (4), wherein the light rays of the display of the second display element impinge at an angle (α) on the transparent plan (7) such that their fractions of transmitted light entering the plate (7) impinge on the faces of the lamellae, which faces are of light-absorbing construction.

2. A display unit according to claim 1, characterised in that the longitudinal span of the lamellae (13) is oriented approximately horizontally.

3. A display unit according to either one of the preceding claims, characterised in that the width of the lamellae (13) approximately corresponds to the distance between the boundaries (12, 15) of the plate (7) in the direction of the connecting line between the observer position (1) and the display element.

4. A display unit according to any one of the preceding claims, characterised in that the plate is a transparent film.

5. A display unit according to any one of the preceding claims, characterised in that the second display element (10) is disposed in a shroud (11) which masks the incidence of light from above on the display plane (5).

6. A display unit according to any one of the preceding claims, characterised in that the second display element (10) is a warning lamp.

7. A display unit according to any one of claims 1 to 5, characterised in that the second display clement is a variable character display in the display.

8. A display unit according to any one of the preceding claims, characterised in that the second display element is a transmissive liquid crystal display.

9. A display unit according to any one of the preceding claims, characterised in that the first display element (4) is a display instrument of an instrument panel.

10. A display unit according to any one of the preceding claims, characterised in that the first display element is a liquid crystal display.

## Revendications

1. Unité ou module d'affichage comportant, d'une part une surface plane d'affichage (5) orientée vers un point d'observation déterminé et contenant un premier élément d'affichage (4) et, d'autre part, un second élément d'affichage (10),dont l'image peut être réfléchie vers le point d'observation (1) par un écran transparent (7), disposé entre ce point d'observation (1) et la surface d'affichage (5) et incliné sous un angle (α) par rapport à une droite passant par ledit poste d'observation (1) et par l'élément d'affichage (4), module caractérisé en ce qu'un grand nombre de lamelles (13) parallèles de faible épaisseur, n'empêchant pas de voir la surface d'affichage depuis le point d'observation, lamelles qui sont disposées dans l'écran transparent (7), dans le sens de leur longueur, sont sensiblement perpendiculaires à la droite qui passe par ce point d'observation (1) et par l'élément d'affichage (4) et qui, dans le sens de leur largeur, sont orientées sensiblement dans le sens de cette droite, les rayons de l'image du second élément d'affichage tombant sur l'écran transparent (7) sous un angle (α) tel que leur partie, qui pénètre par transmission dans cet écran (7) rencontre la face de ces lamelles rendue capable d'absorber de la lumière.

2. Module d'affichage selon la revendication 1, caractérisé en ce que les lamelles (13) sont sensiblement horizontales dans le sens de leur longueur.

3. Module d'affichage selon l'une des revendications précédentes, caractérisé en ce que la largeur des lamelles (13) correspond sensiblement à la distance qui sépare les faces (12, 15) de l'écran (7) dans le sens de la droite qui passe par le point d'observation (1) et par l'élément d'affichage (4).

4. Module d'affichage selon l'une des revendications précédentes, caractérisé en ce que l'écran est une feuille mince transparente.

5. Module d'affichage selon l'une des revendications précédentes, caractérisé en ce que le second élément d'affichage (10) est disposé dans une visière (11) empêchant la lumière de tomber d'en haut sur la surface d'affichage (5).

6. Module d'affichage selon l'une des revendications précédentes, caractérisé en ce que le second élément d'affichage (10) est une lampe-témoin.

7. Module d'affichage selon l'une des revendications 1 à 5, caractérisé en ce que le second élément d'affichage est un élément à affichage par signaux variables.

8. Module d'affichage selon l'une des revendications précédentes, caractérisé en ce que le second élément d'affichage est un dispositif à affichage par transmission à l'aide de cristaux liquides.

9. Module d'affichage selon l'une des revendications précédentes, caractérisé en ce que le premier élément d'affichage (4) est un instrument d'un tableau de bord.

10. Module d'affichage selon l'une des revendications précédentes, caractérisé en ce que le premier élément d'affichage est un affichage à cristaux liquides.
